# EUROPÄISCHE PATENTANMELDUNG

(11) **EP 1 282 295 A2**
(43) Veröffentlichungstag der Anmeldung: **05.02.2003**
(21) Anmeldenummer: 02014598.3
(22) Anmeldetag: 02.07.2002
(51) Int. Cl.: H04M 3/493, H04M 7/00

(54) **Konvertierungseinrichtung und Konvertierungsverfahren für einen akustischen Zugang zu einem Computernetzwerk**

(30) Priorität: 03.08.2001 DE 10138059
(71) Anmelder: Deutsche Telekom AG, 53113 Bonn (DE)
(72) Erfinder: Bormuth, Jürgen, 64646 Heppenheim (DE); Stegmann, Joachim, Dr., 64289 Darmstadt (DE)

(57) **Zusammenfassung**

Die Erfindung betrifft eine Konvertierungseinrichtung (14) für einen akustischen Zugang zu einem Computernetzwerk (10), die für das Umwandeln von textuellen und/oder grafische Inhalte enthaltenden Dokumenten ohne Veränderung der Dokumente in ein Format ausgebildet ist, das für ein Sprachgateway (12) zum Verarbeiten geeignet ist.

## Beschreibung

Die Erfindung betrifft eine Konvertierungsvorrichtung für einen akustischen Zugang zu einem Computernetzwerk gemäß der in Anspruch 1 angegebenen Art und ein entsprechendes Konvertierungsverfahren gemäß der in Anspruch 11 angegebenen Art.

Ein akustischer, insbesondere sprach-basierter Zugang zu einem Computernetzwerk wie beispielsweise dem Internet bietet sich vor allem in Situationen an, in denen entweder kein Computer als Zugangsvorrichtung zur Verfügung steht oder einem Benutzer ausschließlich eine sprachliche Steuerung bzw. Navigation des Zugangs möglich ist, beispielsweise beim Führen eines Kraftfahrzeuges.

Aus der offengelegten deutschen Patentanmeldung DE 199 59 850 A1 der Anmelderin ist ein Kommunikationssystem und ein Verfahren zum Bereitstellen einer Kommunikationsverbindung zwischen einem Benutzer eines an einem ersten Kommunikationsnetz angeschalteten Telefons und einem an einem zweiten Kommunikationsnetz angeschalteten Server bekannt. Hierdurch soll insbesondere ein sprach-basierter Zugang insbesondere zum Internet ermöglicht werden.

Mittels eines Telefons kann sich ein Benutzer in eine Verbindungseinrichtung einwählen. Über diese Verbindungseinrichtung erhält er einen sprach-basierten Zugang zum Internet. Die Verbindungseinrichtung setzt hierzu vom Benutzer gesprochene Anweisungen in Anweisungen für das Internet, beispielsweise zum Laden einer bestimmten Web-Seite um. Sobald die entsprechende Seite von der Verbindungseinrichtung geladen ist, wird sie mittels einer sogenannten Text-To-Speech-Einrichtung in Sprache umgesetzt und dem Benutzer über das Telefon vorgelesen. Allerdings können mit diesem System und Verfahren nur solche Web-Seiten in guter Qualität verarbeitet, d.h. akustisch wiedergegeben werden, die speziell dafür vorbereitet, also manipuliert sind. Beispielsweise müssen in derartige Web-seiten spezielle Konstrukte für die akustische Wiedergabe eingefügt werden (siehe unten).

Für einen akustischen Zugang zum Internet sind also im wesentlichen zwei Komponenten erforderlich: einen Interpreter zur Umsetzung der Web-Inhalte in einen Sprachdialog sowie eine Telefonieplattform. Ferner sind Komponenten wie eine automatische Spracherkennung und Text-to-Speech erforderlich.

Grundlage für derartige sprach-basierte Zugänge insbesondere zum Internet ist ein sogenannter Sprach-Browser, also ein Programm das eine sprach-gesteuerte Navigation durch das Internet ermöglicht. Hierfür wurde vom VoiceXML-Forum die Auszeichnungssprache VoiceXML als Ableger der Auszeichnungssprache (auch als Markup Language bezeichnet) XML (eXtensible Markup Language) entwickelt. VoiceXML ist ähnlich wie die Auszeichnungssprache HTML (HyperText Markup Language) zur Beschreibung von Internet- bzw. Web-Seiten entworfen worden. Gegenüber den herkömmlichen Auszeichnungssprachen wie HTML zeichnet sich VoiceXML durch spezielle Konstrukte für die akustische Wiedergabe von Informationen und insbesondere sprach-basierte Internet-Navigation aus.

Eine weitere, allerdings für andere Zwecke vorgesehene, Sprache für die Beschreibung von Internet- bzw. Web-Seiten ist WML (Wireless Markup Language). Diese Auszeichnungssprache wurde für Web-Seiten entwickelt, auf die von sogenannten Mikro-Browsern zugegriffen werden kann. Derartige Mikro-Browser sind für kleine, insbesondere mobile, Endgeräte entwickelt worden und berücksichtigen deren eingeschränkte Anzeigemöglichkeiten aufgrund kleiner Displays. In WML erstellte Web-Seiten werden überwiegend für den Abruf durch Mobiltelefone als Endgeräte erstellt. Der drahtlose Zugriff auf die WML-Web-Seiten mittels Mobiltelefonen wird durch WAP (Wireless Application Protocol) ermöglicht. Die WAP-Spezifikation dient ganz allgemein zur Standardisierung der Kommunikation in drahtlosen Netzwerken.

Um die mit den herkömmlichen Auszeichnungssprachen wie HTML oder XML erstellten Web-Seiten über WAP verfügbar zu machen, ist eine Transformation in WML erforderlich. Bei dieser Transformation spielen im wesentlichen zwei Faktoren eine Rolle: einerseits soll eine kompakte Darstellung der zumeist textuellen und grafischen Anteile der Web-Seiten erreicht werden, die insbesondere zur Übertragung über die fehlerbehafteten Mobilfunkkanäle mit niedriger Datenrate geeignet ist. Andererseits soll die Art der Darstellung der Informationen für kleine Displays wie bei Mobilfunkendgeräten, die zudem häufig eine geringe Auflösung besitzen, geeignet sein. Ferner ist zu bedenken, dass die Benutzereingabe über die eingeschränkte Tastatur der Mobiltelefone erfolgt und daher entsprechend vereinfacht werden sollte.

WAP-Zugänge sind u.a. für Unternehmen von Bedeutung, die beispielsweise ihren Außendienstmitarbeitern interne Datenbanken mobil zugänglich machen wollen. Alternativ bietet sich ein sprach-basierter Zugang zu den unternehmensinternen Datenbanken an - wie er aus der eingangs erwähnten DE 199 59 850 A1 bekannt ist. Hierzu wird dann kein WAP-fähiges Endgerät benötigt. Ein derartiger Zugang ist im Prinzip von jedem Fernsprechapparat möglich. Unter anderem kann ein sprach-basierter Zugang für Außendienstmitarbeiter besonders vorteilhaft sein, wenn diese häufig mit dem Kraftfahrzeug unterwegs sind.

Ein akustischer Zugang zu Dokumenten mit textuellem und/oder grafischem Inhalt auf Basis der DE 199 59 850 A1 ist - wie bereits erwähnt - jedoch nur mit guter Qualität möglich, wenn diese Dokumente spezielle Konstrukte für die akustische Wiedergabe und Navigation aufweisen.

Aufgabe der vorliegenden Erfindung ist es daher, eine Konvertierungseinrichtung und ein Konvertierungsverfahren für einen akustischen Zugang zu einem Computernetzwerk, insbesondere mindestens einem Informationsserver des Computernetzwerks zu ermöglichen, mit denen ein akustischer Zugang zu Dokumenten mit textuellem und/oder grafischem Inhalt mit hoher Qualität ohne eine Modifikation der Dokumente ermöglicht wird.

Diese Aufgabe wird durch eine Konvertierungseinrichtung für einen akustischen Zugang zu einem Computernetzwerk mit den Merkmalen nach Anspruch 1 und durch ein entsprechendes Konvertierungsverfahren mit den Merkmalen nach Anspruch 11 gelöst.

Der Erfindung liegt der Gedanke zugrunde, die in Computernetzwerken wie beispielsweise dem Internet vorhandene Fülle an Dokumenten mit grafischem und/oder textuellem Inhalt durch eine im wesentlichen automatische Konvertierung bzw. Umwandlung auch über einen akustischen Zugang zum Computernetzwerk zugänglich zu machen. Hierdurch wird einerseits der Aufwand einer manuellen oder halbautomatischen Umwandlung der Dokumente verringert. Andererseits kann ein im wesentlichen unbeschränkter akustischer Zugang zu den Informationen im Computernetzwerk ermöglicht werden. Ferner hat ein Content-Provider keinen Aufwand, sein Angebot an Informationen für einen akustischen Zugang zu überarbeiten.

Hierzu wird eine Konvertierungseinrichtung für einen akustischen Zugang zu einem Computernetzwerk vorgeschlagen, die für das Umwandeln von textuellen und/oder grafische Inhalte enthaltenden Dokumenten in ein Format ausgebildet ist, das für ein Sprachgateway zum verarbeiten geeignet ist. Hierbel wird Keine Veränderung der Dokumente vorgenommen, d.h. diese bleiben im wesentlichen unberührt. Vorzugsweise kann die Konvertierungseinrichtung auf mindestens einen Informationsserver zugreifen, der textuelle und/oder grafische Inhalte, insbesondere in Form von Dokumenten, aufweist, beispielsweise XML- oder WML-Seiten. Die Konvertierungseinrichtung kann beispielsweise zwischen den mindestens einen Informationsserver und ein oder mehrere Sprachgateways geschaltet sein. In diesem Fall dient sie im wesentlichen als Dolmetscher zwischen dem Sprachgateway und den textuellen und/oder grafischen Inhalten von Dokumenten, die mittels des akustischen Zugangs von einem Benutzer abgerufen werden können. Das Sprachgateway ist als Verbindungseinrichtung zwischen dem Computernetzwerk und dem akustischen, insbesondere sprach-basiertem Zugang beispielsweise mittels eines Telefons vorgesehen. Das Sprachgateway kann einerseits akustische Informationen in Steuerbefehle und andererseits Daten in akustische Informationen umsetzen. Es agiert sozusagen als Dolmetscher zwischen Computernetzwerk und einem Benutzer des akustischen Zugangs.

Vorzugsweise umfasst die Konvertierungseinrichtung einen Client und einen Server. Der Server dient zum Verarbeiten von Anforderungen des Sprachgateways. Der Client ist zum Erzeugen von Befehlen zum Anfordern von textuelle und/oder grafische Inhalte enthaltenden Dokumenten mindestens eines Informationsservers des Computernetzwerks ausgebildet. Demnach stellt sich die Konvertierungseinrichtung nach außen, also insbesondere schnittstellen-mäßig als Web-Client und -Server dar.

Sie ist dadurch in bestehende Computernetzwerke, insbesondere dem Internet ohne großen Aufwand integrierbar.

Die Konvertierungseinrichtung kann ferner derart ausgebildet sein, dass vom Informationsserver an den Client gelieferte Inhalte in das Format für das Sprachgateway umgewandelt werden. Eine Umwandlung erfolgt somit dynamisch, d.h. direkt bei Anforderung einer Web-Seite vom Informationsserver. Dadurch ist der umgewandelte Inhalt immer aktuell, da er erst bei Anforderung mittels des akustischen Zugangs erzeugt wird.

Da die textuellen und/oder grafischen Inhalte Elemente aufweisen können, die nicht in das Format für das Sprachgateway umwandelbar sind, weist die Konvertierungseinrichtung in einer bevorzugten Ausführungsform mindestens eine Filterfunktion auf, die derart einstellbar ist, dass aus allen Elementen eines Dokuments mit textuellem und/oder grafischem Inhalt nur die Elemente gefiltert werden, die in das Format für das Sprachgateway umwandelbar sind.

Vorzugsweise ist die Konvertierungseinrichtung zum Kommunizieren mittels der Protokolle HTTP und/oder HTTPS mit dem Sprachgateway und dem mindestens einen Informationsserver ausgebildet. Hierzu umfasst die Konvertierungseinrichtung in einer besonders bevorzugten Ausführungsform HTTP(S)-Schnittstellen in Richtung zum Sprachgateway und zu dem mindestens einen Informationsserver. Insbesondere soll die Konvertierungseinrichtung eine volle Unterstützung des HTTP(S)-Protokolls mit beispielsweise "Redirect", "Cookies" und dergleichen Funktionalitäten bieten.

Ferner kann die Konvertierungseinrichtung einen Parser aufweisen, der zum Parsen von vorzugsweise textuellen Inhalten ausgebildet ist. Ein speziell für diesen Anwendungsfall ausgebildeter Parser kann an die spezifischen Anwendungsmöglichkeiten des akustischen Zugangs angepasst und entsprechend schnell sein.

Vorzugsweise ist das Computernetzwerk das Internet oder ein Intranet. Im Falle eines Intranets kann beispielsweise ein WML-Server vorgesehen sein, um einem Außendienstmitarbeiter eines Unternehmens Zugang zu Datenbanken über ein WAP-fähiges mobiles Endgerät wie ein WAP-Mobiltelefon oder einem WAP-Browser eines Handheld- oder Palmtop-Computers zu ermöglichen. Mittels des Sprachzugangs kann nunmehr der Außendienstmitarbeiter auch mit einem herkömmlichen Telefon oder Mobiltelefon einen Zugang zu der erwähnten Datenbank finden.

Die Inhalte können in der Auszeichnungssprache WML erstellt sein. In einer derzeit bevorzugten Ausführungsform umfasst das Sprachgateway einen VoiceXML-Interpreter. Dementsprechend ist die Konvertierungseinrichtung vorzugsweise zum Umwandeln der textuellen und/oder grafischen Inhalte in die Auszeichnungssprache VoiceXML ausgebildet.

Schließlich kann der mindestens eine Informationsserver ein WML-Server sein, dessen Inhalte insbesondere mittels eines WAP-fähigen mobilen Endgeräts, beispielsweise eines Mobiltelefons oder eines Handheldcomputers, abrufbar sind.

Das Sprachgateway ist vorzugsweise mit einem Telekommunikationsnetz, beispielsweise einem Mobilfunkoder einem öffentlichen Telefonnetz, verbunden. Hierdurch wird ein im wesentlichen weltweiter Zugang ermöglicht. Vor allem ist im Prinzip lediglich ein einfaches Telefon (oder auch ein Mobiltelefon oder ein IP-Telefon nach dem H.323-Standard) das noch nicht einmal MVF-fähig sein muss, für einen akustischen, dann sprach-basierten, Zugang zum Computernetzwerk ausreichend.

Die Erfindung betrifft ferner ein Konvertierungsverfahren für einen akustischen Zugang zu einem Computernetzwerk, bei dem die erfindungsgemäße Konvertierungseinrichtung eingesetzt wird. Bei dem Verfahren fordert die Konvertierungseinrichtung bei Eingehen einer Anforderung vom Sprachgateway zum Laden und Konvertieren eines Dokuments mit textuellem und/oder grafischem Inhalt das entsprechende Dokument von einem Informationsserver an. Nach Lieferung des angeforderten Dokuments wandelt sie dessen Inhalt in ein für das Sprachgateway geeignetes Format um.

In einer konkreten bevorzugten Ausgestaltung analysiert die Konvertierungseinrichtung zum Konvertieren den textuellen und/oder grafischen Inhalt des gelieferten Dokuments. Anschließend erzeugt sie ein zweites Dokument im Format für das Sprachgateway und übermittelt es an das Sprachgateway. Die Analyse und Erzeugung des zweiten Dokuments wird insbesondere anhand einer Entscheidungslogik und dynamischer Filter durchgeführt. Die Entscheidungslogik wählt hierbei die umzuwandelnden Elemente des gelieferten Dokuments aus. Die dynamischen Filter dienen zum Filtern von Elementen, die nicht umgewandelt werden sollen, beispielsweise von Grafiken. Alternativ können Grafiken auch in einen speziell vorgesehen Text umgewandelt werden.

Vorzugsweise wird bei einer Anforderung des Sprachgateways zum Laden und Umwandeln eines Dokuments mit textuellem und/oder grafischem Inhalt ein Application Root Dokument gebunden. Dieses Dokument kann auch auf Anfrage dynamisch erzeugt werden. Das Application Root Dokument dient zur globalen Definition von Funktionen und Variablen für das Format für das Sprachgateway. Es kann mindestens eine Funktion zur Behandlung von Fehlern, die bei einer Umwandlung auftreten können, und Variablen zur Ablaufsteuerung der Umwandlung umfassen. Entweder ist das Application Root Dokument für alle Dokumente gleich oder wird anhand einer Startadresse eines umzuwandelnden Dokuments erzeugt.

Der akustische Zugang, insbesondere eine sprachgesteuerte Navigation durch das Internet, kann vor allem dadurch erleichtert, insbesondere beschleunigt werden, indem alle weiteren erreichbaren Dokumente, auf die in dem geladenen Dokument verwiesen wird bzw. die referenziert sind, von der Konvertierungseinrichtung geladen, umgewandelt und in dieser zwischengespeichert werden. Mit anderen Worten werden die im Dokument insbesondere durch Verweise (Links) referenzierten Dokumente bereits geladen, wenn der Benutzer des Dokuments diese noch gar nicht verlangt bzw. angefordert hat. Hierbei ist eine Unterscheidung zwischen statischen und dynamischen Dokumenten von besonderer Bedeutung. Statische Dokumente können problemlos ohne Anforderung, nur aufgrund einer Verweisung, geladen werden. Schwierig wird es bei dynamischen Dokumenten, da diese Benutzereingaben erfordern, die zur Inhaltserzeugung benötigt werden. Ferner können die in den referenzierten Dokumenten enthaltenen Verweise in Verweislisten des aktuellen Dokuments übernommen werden, um einen Zugriff auf die referenzierten Dokumente zu beschleunigen.

Eine weitere Beschleunigung und Erleichterung des akustischen Zugangs, insbesondere des Navigierens wird durch ein Cache-Management erreicht. Hierzu werden vorzugsweise von der Konvertierungseinrichtung umgewandelte Dokumente in einem Cache-Speicher abgelegt. Bei nochmaliger Anforderung dieser Dokumente können diese einfach aus dem Cache-Speicher geladen werden. Eine erneute Umwandlung der Dokumente entfällt. Allerdings muss bei dynamischen Dokumenten beachtet werden, dass sich der Inhalt zwischenzeitlich geändert haben kann. Vorzugsweise werden die bereits umgewandelten Dokumente daher in einer Datenbank gespeichert. In dieser Datenbank werden zudem für jedes Dokument Informationen gespeichert, die Rückschlüsse auf die Quelle und den Lade- und Umwandlungszeitpunkt zulassen. Bei erneutem Anfragen der Seite wird die gespeicherte Seite mit der Originalseite auf dem Server verglichen, beispielsweise über das HTTP-Header-Feld: If-Modified-Since. Ebenso sollten Meta-Angaben in Dokumenten interpretiert und im Cache-Management entsprechend abgebildet werden.

Um zu verhindern, dass auf Kosten der Provider, die Inhalte und Dokumente auf Informationsservern zur Verfügung stellen, navigiert und vor allem Informationen abgerufen werden, kann die Konvertierungseinrichtung derart konfiguriert werden, dass nur Dokumente von vorbestimmbaren Informationsservern geladen und umgewandelt werden können. Mit anderen Worten ist der Zugriff über das Sprachgateway und die Konvertierungseinrichtung auf die Informationen im Computernetzwerk beschränkbar. Ein Benutzer, der einen Zugang über das Sprachgateway zu dem Computernetzwerk sucht, hat dann - wenn vom Content-Provider gewünscht - nur einen eingeschränkten Zugriff auf die Informationen im Computernetzwerk.

Weitere Vorteile, Merkmale und Anwendungsmöglichkeiten der vorliegenden erfindungsgemäßen Konvertierungseinrichtung und des erfindungsgemäßen Verfahrens für einen akustischen Zugang zu einem Computernetzwerk ergeben sich aus der nachfolgenden Beschreibung in Verbindung mit dem in der Zeichnung dargestellten Ausführungsbeispielen.

In der Beschreibung, in den Ansprüchen, der Zusammenfassung und in der Zeichnung, werden die in der hinten angeführten Liste der Bezugszeichen verwendeten Begriffe und zugeordneten Bezugszeichen verwendet.

In der Zeichnung bedeutet:
- Fig. 1: die prinzipielle Anordnung eines Ausführungsbeispiels der erfindungsgemäßen Vorrichtung mit einem WML-Server als Informationsserver;
- Fig. 2: den detaillierten Aufbau der Konvertierungseinrichtung von Fig. 1 und deren Verbindung mit dem WML-Server und dem Sprachgateway;
- Fig. 3: die Beziehung zwischen einem Application Root Dokument und umzuwandelnden Dokumenten;
- Fig. 4: die unterschiedlichen Sichtweisen einer auf VoiceXML basierenden Anwendung;
- Fig. 5: ein Beispiel eines WML-Dokuments;
- Fig. 6: ein Beispiel eines Application Root Documents; und
- Fig. 7a, 7b: das in Fig. 5 gezeigte WML-Dokument nach einer Umwandlung in ein VoiceXML-Dokument.

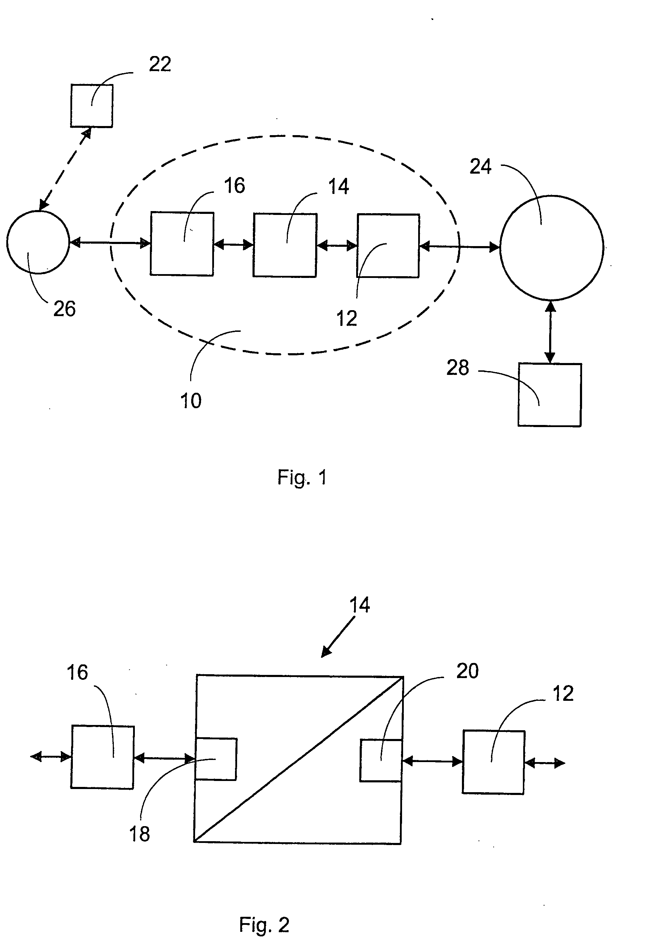

In Fig. 1 ist ein IP(Internet Protocol)-Netzwerk 10 als Computernetzwerk dargestellt. Auf das IP-Netzwerk 10 kann einerseits mittels eines mobilen Endgerätes 22, beispielsweise einem WAP-fähigen Mobilfunktelefon, und andererseits mittels eines herkömmlichen Telefons 28 zugegriffen werden. Der Zugriff erfolgt beim mobilen Endgerät 22 über ein Mobilfunk-Gateway 26, das auf der einen Seite in Funkkontakt mit dem mobilen Endgerät 22 und auf der anderen Seite mit dem Computernetzwerk bzw. IP-Netzwerk 10 verbunden ist. Das Telefon 28 ist über ein öffentliches Telekommunikationsnetz 24 mit dem IP-Netzwerk 10 verbunden.

Das IP-Netzwerk 10 umfasst einen WML-Server 16, auf dem textuelle und/oder grafische Informationen in Form von Dokumenten abgelegt sind. Die Dokumente sind mit der Auszeichnungssprache WML erstellt und primär zum Abruf mittels WAP-fähiger mobiler Endgeräte gedacht.

Unter textuellen und/oder grafischen Dokumenten wird daher im folgenden insbesondere ein mit der Auszeichnungssprache WML erstelltes Dokument verstanden. Da auch bei einem sprachbasiertem oder akustischem Zugang zum Internet oder einem IP-Computernetzwerk wie in diesem Ausführungsbeispiel Bilder nicht optimal sind und das Navigieren gegenüber herkömmlichen Zugängen mittels Tastatur und Maus oder dergleichen Zeigegeräten erschwert ist, bietet sich die Konvertierung bzw. Umwandlung der WML-Dokumente in ein Format an, dass für einen Sprach- oder akustischen Zugang geeignet ist.

Hierzu ist im IP-Netzwerk 10 eine Konvertierungseinrichtung 14 mit dem WML-Server 16 verbunden. Ferner ist die Konvertierungseinrichtung 14 mit einem Sprachgateway 12 verbunden, das einen akustischen oder Sprachzugang zu dem IP-Netzwerk 10 ermöglicht.

Im vorliegenden Ausführungsbeispiel erfolgt dieser akustische bzw. Sprachzugang über das öffentliche Telekommunikationsnetz 24. Um einen derartigen Zugang zu erhalten, muss ein Benutzer lediglich über sein Telefon 28 das Sprachgateways 12 über das öffentliche Telekommunikationsnetz 24 anwählen. Das Sprachgateway 12 stellt dann eine Verbindung zwischen dem öffentlichen Telekommunikationsnetz 24 und dem IP-Netzwerk bzw. Computernetzwerk 10 her und bietet dem Benutzer eine Navigationsmöglichkeit oder Abrufmöglichkeit über sein Telefon 28 von Informationen aus dem IP-Netzwerk 10, genauer gesagt von Informationen des WML-Servers 16. Der Benutzer benötigt somit zum Abrufen der Informationen des WML-Servers 16 kein Terminal mit Anzeige. Er kann die Informationen praktisch von überall, d.h. wo ein Sprachzugang möglich ist, abrufen.

Da die auf dem WML-Server abgelegten Informationen bzw. Dokumente eigentlich zur Anzeige auf einem Display eines mobilen Endgerätes 22 gedacht sind, übernimmt die Konvertierungseinrichtung 14 die automatische Umwandlung der Informationen bzw. Dokumente in ein für das Sprachgateway 12 zur Verarbeitung geeignetes Format; im vorliegenden Ausführungsbeispiel ist dies die Auszeichnungssprache VoiceXML, die speziell zur Sprachnavigation bzw. akustischen Navigation durch das Internet standardisiert wurde.

Der genaue Aufbau der Konvertierungseinrichtung ergibt sich aus Fig. 2. Im Prinzip umfasst die Konvertierungseinrichtung eine Client-Server ähnliche Architektur. Die Konvertierungseinrichtung 14 weist einen Client 18 und einen Server 20 auf. Der Server 20 der Konvertierungseinrichtung 14 ist mit dem Sprachgateway 12 verbunden. Eine Kommunikation zwischen dem Sprachgateway 12 und dem Server 20 erfolgt mittels des Protokolls HTTP(S). Der Client 18 der Konvertierungseinrichtung 14 ist wiederum mit dem WML-Server 16 verbunden. Er kommuniziert ebenfalls mittels des Protokolls HTTP(S) mit dem WML-Server.

Der Abruf von Informationen vom WML-Server 16 über das Sprachgateway 12 erfolgt als typische Client-Server-Interaktion: Das Sprachgateway 12 fordert ein Dokument vom Server 20 der Konvertierungseinrichtung 14 mittels eines bestimmten Befehls an. Diese Anforderung wird in der Konvertierungseinrichtung an den Client 18 weitergegeben, der hierzu von dem WML-Server 16 ebenfalls mittels einer Anforderung eines speziellen Befehls das entsprechende Dokument lädt.

Der WML-Server 16 überträgt das angeforderte WML-Dokument an den Client 18. Dieses Dokument wird dann in der Konvertierungseinrichtung 14 von WML in VoiceXML umgewandelt und vom Server 20 an das Sprachgateway übertragen. Das Sprachgateway 12 erzeugt nun entsprechend den Anweisungen des Dokuments in VoiceXML eine Sprachausgabe. Konkret wird das Dokument einem Benutzer, der den Zugang über das Sprachgateway 12 eröffnet und das Dokument angefordert hat, vorgelesen. Hierzu weist das Sprachgateway 12 bekanntermaßen eine (nicht dargestellte) Text-to-Speech-Einrichtung auf. Spracheingaben des Benutzers werden von einem (nicht dargestellten) automatischen Spracherkenner im Sprachgateway 12 verarbeitet.

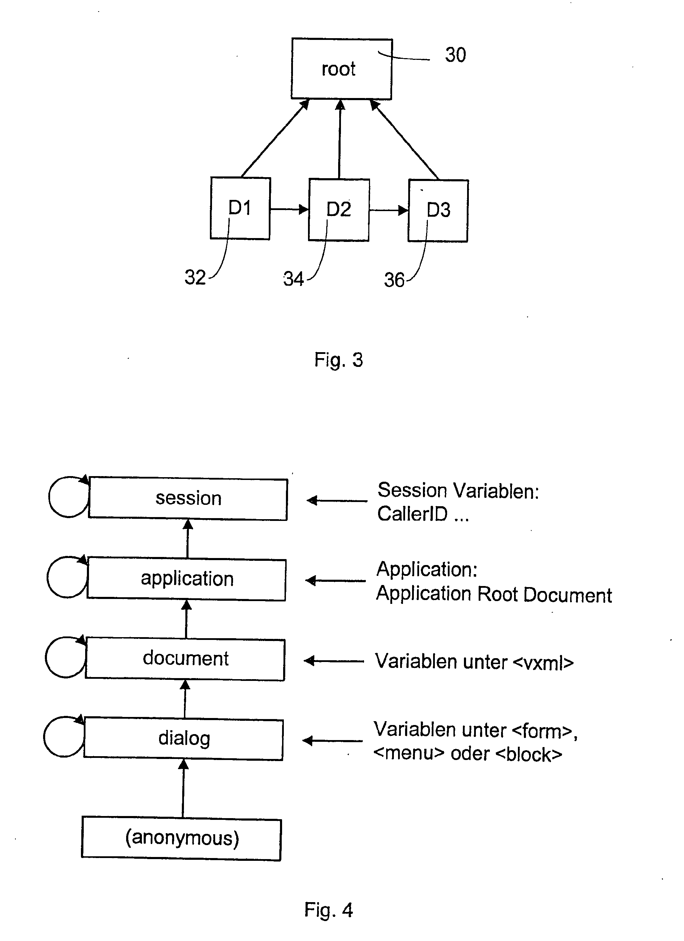

Beim Umwandlungsvorgang des von dem WML-Server 16 angeforderten Dokuments in der Konvertierungseinrichtung 14 wird ein in Fig. 3 dargestelltes Application Root Dokument 30 an abgerufene bzw. angeforderte Dokumente 32, 34, 36 gebunden. Das Application Root Dokument 30 dient konkret zur Abbildung von bestimmten Tasks im angeforderten Dokument 32, 34, 36 in Sprachkonstrukte in VoiceXML. Diese Abbildung soll über Variablen und Verbindungen im Application Root Dokument erfolgen. Das Application Root Dokument 30 wird an ein angefordertes Dokument D1 32 gebunden; ebenso wird es an die vom angeforderten Dokument D1 32 referenzierten Dokumente D2 34 und D3 36 gebunden.

Bei der Umwandlung von textuellen und/oder grafischen Inhalten in ein Format für die Verarbeitung durch das Sprachgateway 12 in der Konvertierungseinrichtung 14 sind insbesondere noch folgende Erfordernisse von Bedeutung (im folgenden am Beispiel von WML erläutert):

In der Auszeichnungssprache WML werden häufig Zeichen wie "+" oder ">>" benutzt, um Dokumente zu formatieren. Bei der Umwandlung können diese Zeichen über anpassbare bzw. konfigurierbare Filter, also dynamische Filter, durch andere, besser für VoiceXML geeignete Zeichen ersetzt werden. Insbesondere erfolgt die Ersetzung hinsichtlich einer akustischen Wiedergabe. Konkret werden Zeichen, die sich akustisch schlecht wiedergeben lassen, in für die akustische Wiedergabe geeignete Zeichen umgewandelt. Zeichen die sich überhaupt nicht akustisch wiedergeben und auch nicht sinnvoll ersetzen lassen, werden ganz einfach durch Leerzeichen ersetzt.

Menüs in der Auszeichnungssprache WML können in sogenannte Link- bzw. Verweislisten abgebildet werden. Dies bedeutet, dass alle Verweise bzw. Links in einem Dokument in eine Liste aufgenommen werden, die auf Nachfrage oder Anforderung eines Benutzers einzeln vorgelesen werden können. Hierdurch kann der Benutzer individuell entscheiden, ob die Liste mit Links gleich am Beginn eines Dokuments vorgelesen werden soll. Dies kann wesentlich die Navigationsgeschwindigkeit durch das Internet erhöhen.

Eine weitere Erhöhung der Navigationsgeschwindigkeit kann durch ein sogenanntes "Prefetch", also Vorausladen von Dokumenten, die in dem angeforderten Dokument durch Verweise referenziert werden, erfolgen. Beim "Prefetch" werden beim Anfordern eines Dokuments und insbesondere beim Umwandeln Verweise auf referenzierte Dokumente ausgewertet; dabei werden die referenzierten Dokumente von der Konvertierungseinrichtung 14 geladen und sozusagen parallel zu dem angeforderten Dokument umgewandelt. Die umgewandelten und noch nicht vom Benutzer angeforderten Seiten werden dann in der Konvertierungseinrichtung 14 in einem Speicher abgelegt. Sofern der Benutzer einen Verweis im angeforderten Dokument anfordern, d.h. aufrufen will, entfällt hierdurch die Zeit für das erneute Anfordern des durch den Verweis referenzierten Dokuments und Umwandelns. Dies beschleunigt den Zugriff auf referenzierte Dokumente beträchtlich. Ein "Prefetch" bietet sich vor allem bei statischen Dokumenten an. Bei dynamischen Dokumenten ist ein "Prefetch" eher kritisch, da der Inhalt dieser Dokumente von Eingaben des Benutzers abhängt. Vorzugsweise wird daher ein "Prefetch" nur mit statischen Dokumenten durchgeführt.

Ein weiterer wesentlicher, bei der Umwandlung zu beachtender, Punkt sind Grammatiken bzw. die Behandlung von Grammatiken. Grammatiken stellen die Schnittstelle zwischen einem Benutzer und dem Sprachgateway 12 dar. Sie müssen mit besonderer Sorgfalt erzeugt werden, da durch sie das Navigieren wesentlich beeinflusst wird. Eine globale Grammatik weist unter anderem Phrasen zur Navigation wie beispielsweise "Zurück", "Hilfe", "Reload" oder dergleichen auf. Üblicherweise sind diese Phrasen im Application Root Dokument referenziert. Die zugehörigen Funktionen, die in der Programmiersprache JAVA oder über "<form>"-Konstrukte realisiert werden können, sind ebenfalls in dem Application Root Dokument definiert. Sie können jedoch in VoiceXML-Dokumenten überschrieben werden.

Insbesondere enthalten Dokument-Grammatiken Linklisten für das gesamte Dokument. Dialog-Grammatiken ergeben sich aus den im aktuellen Dialog eines Benutzers mit dem Computernetzwerk gültigen Links. Ein Dialog umfasst den Umfang eines "<card>"-Konstrukts in der Auszeichnungssprache WML. Hierbei ist insbesondere die Trennung der Sichtweise von Dialog- und Dokument-Grammatik - wie in Fig. 4 dargestellt - wichtig. Es ist zu beachten, das jeder Link einen eindeutigen Bezeichner in der Grammatik erhält. Entweder kann dies das Linklabel selbst und/oder ein eindeutig generierter Bezeichner sein. In beiden Fällen muss für einen Benutzer eindeutig erkennbar sein, was ein Link ist. Beispielsweise kann dies durch eine besondere akustische Betonung des Links oder durch Voran- oder Hintanstellen eines Hinweises sein. Auch optionale Phrasen wie beispielsweise "ich würde gern" oder "ähm" sollten in der Grammatik abgebildet werden. Prinzipiell kann das Format der Grammatik frei gewählt werden. Es empfiehlt sich jedoch, die Grammatik konform zur "Speech Recognition Grammar Specification" des W3C auszulegen.

An dieser Stelle sei noch mal auf den oben erläuterten "Prefetch"-Mechanismus hingewiesen: "Verlinkte" Dokumente, d.h. referenzierte Dokumente können bereits geladen und analysiert werden, während ein Dokument umgewandelt wird. Daraus resultierende Links können dann in die Dokumenten-Linkliste übernommen werden. Dies hat den Vorteil, dass ein Benutzer, der tiefere Menüstrukturen kennt, schneller navigieren kann.

Es ist auch möglich, individuell anpassbare Hilfetexte vorzusehen. Derartige Hilfetexte sind für jede URL (Uniform Resource Locator) frei einstellbar. Hierdurch lassen sich gezielte Hilfestellungen beim Navigieren geben.

Beim Umwandeln in der Konvertierungseinrichtung 14 auftretende Fehler können individuell abgefangen werden. Beispielsweise kann bei Auftreten eines Fehlers ein bestimmtes Dokument mit der Beschreibung des Fehlers und Tipps für das weitere Vorgehen geladen werden. Eine Fehlerbehandlung kann für jede URL individuell eingestellt werden.

Von besonderer Bedeutung ist die Möglichkeit des sogenannten "Barge-In". Unter einem "Barge-In" wird die Unterbrechung der Textausgabe per Spracheingabe durch den Benutzer verstanden. Ein derartiges "Barge-In" sollte auf jeden Fall zugelassen werden, um dem Benutzer beim Navigieren mehr Freiheiten zu bieten. Vorzugsweise werden für eine "Barge-In"-Entscheidung konfigurierbare, d.h. dynamische, Filter verwendet.

Ein weiterer zu beachtender Punkt ist die Behandlung von Formularen. Formulare müssen analysiert und entsprechend in VoiceXML übertragen werden. Hierbei existieren verschiedene Möglichkeiten, freie Eingaben über das "<object>"-Tag zu realisieren. Eine derartige Realisierung muss jedoch vom Sprachgateway 12 unterstützt werden. Sie ist daher optional, d.h. kann ein- oder ausgeschaltet werden. Die Formular-Behandlung kann an verschiedene Sprachgateways angepasst sein. Eine Entscheidung über die Implementierung kann beispielsweise über das HTTP-Header-Feld "User-Agent" erfolgen. Die genaue Implementierung von Feldern zur Eingabe von Daten soll insbesondere individuell einstellbar sein.

In VoiceXML gibt es "Blocks" und "Fields". In "Blocks" kann ein Benutzer keine Interaktion durchführen. Dagegen ermöglichen "Fields" Benutzereingaben. Die Entscheidung, wann ein "Block" oder ein "Field" erzeugt wird, kann über spezielle Filter beeinflusst werden. Beispielsweise ist eine Filtermöglichkeit die Analyse, ob in einer "<card>"-Anweisung mindestens zwei Links vorhanden sind. Ist dies der Fall, bietet sich ein "Field" als Lösung an. Ebenso muss ein "Field" benutzt werden, wenn Felder mit Eingaben zu füllen sind.

Eine Umsetzung von WML-Scripten kann direkt in VoiceXML erfolgen, da WML-Scripte JAVA-Scripte sind. Allerdings müssen Funktionsaufrufe korrekt in VoiceXML eingebunden werden. Die JAVA-Script-Umsetzung kann über dynamische Filter entfernt oder sogar bearbeitet werden.

WML-Variablen sollten im Dokument abgebildet werden. Ob hierbei eine spezielle JAVA-Konstruktion oder die regulären VoiceXML-Variablen benutzt werden, ist im wesentlichen gleichwertig. Von Bedeutung ist lediglich, dass diese Variablen im weiteren Kontext zur Verfügung stehen.

In HTTP sind sogenannte GET- und POST-Methoden definiert. Diese können in WML benutzt werden. Beide Methoden sollten in VoiceXML korrekt abgebildet werden, da sonst Server-Scripte keine adäquate Antworten generieren können. Hierzu müssen sämtliche Links im WML-Dokument geändert werden, so dass das Sprachgateway 12 die weiteren Anfragen nicht an den WML-Server 16 sendet, sondern die Kommunikation weiterhin über die Konvertierungseinrichtung erfolgt.

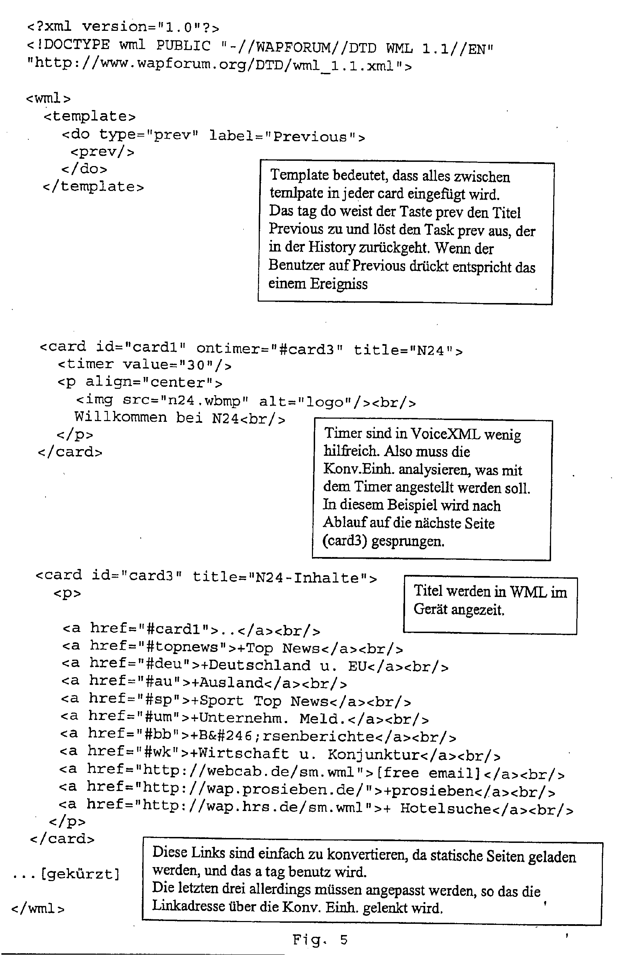

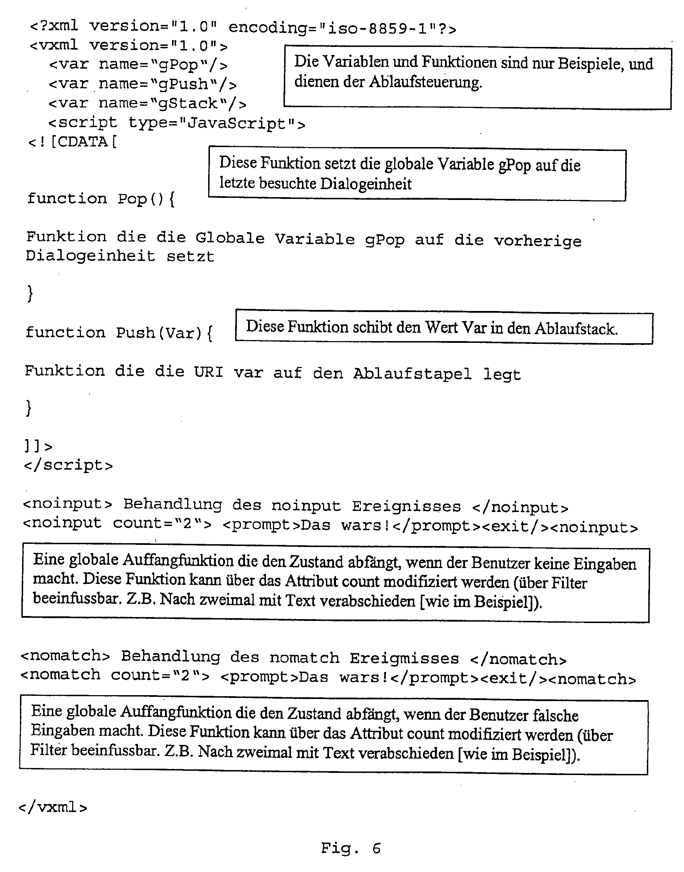

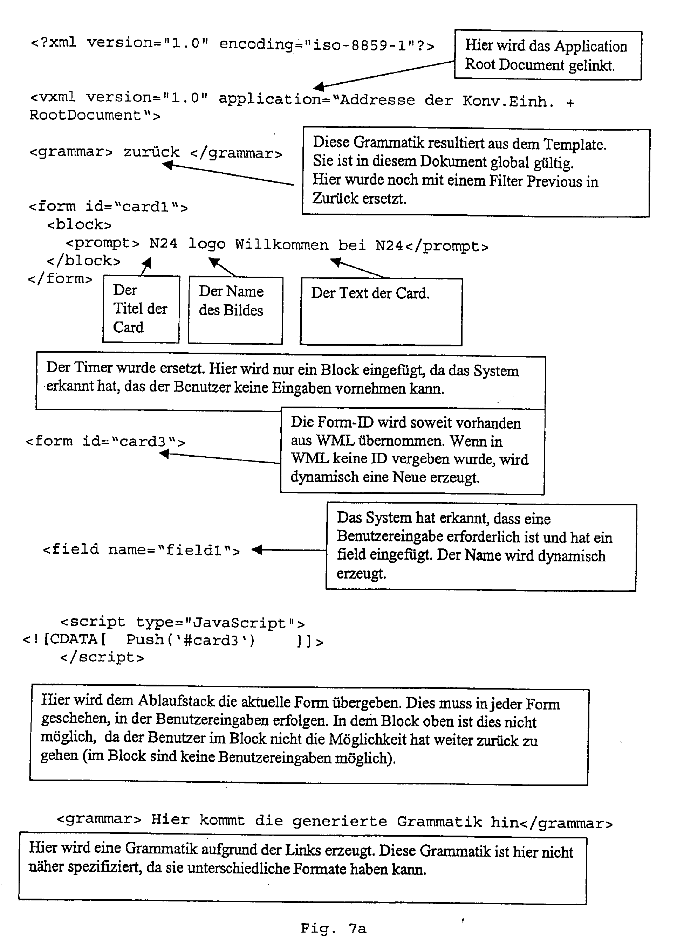

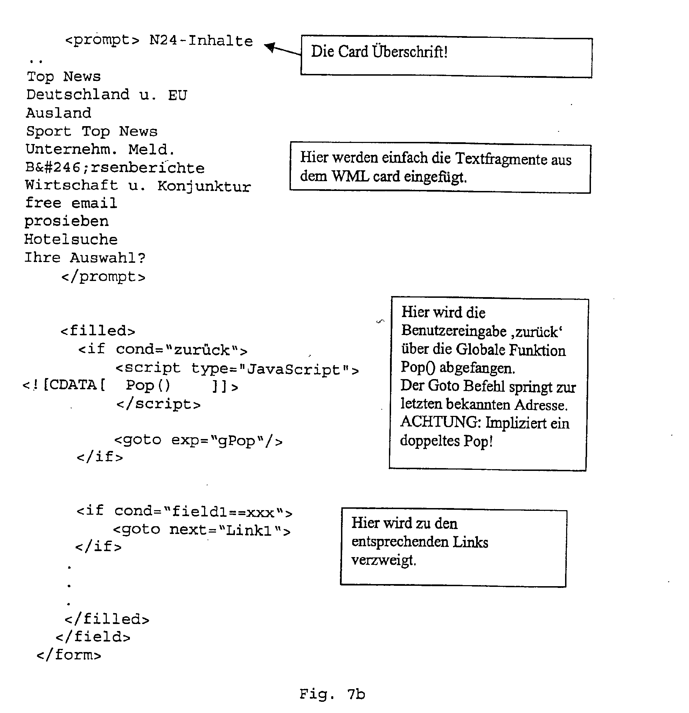

Schließlich sind in den Fig. 5 bis 7 noch konkrete Beispiele der Umwandlung eines WML-Dokuments (Fig. 5) in ein VoiceXML-Dokument (Fig. 7a und Fortsetzung auf Fig. 7b) mithilfe eines Application Root Documents (Fig. 6) gezeigt. Die in den Fig. gezeigten Quelltexte sind mit Anmerkungen zum leichteren Verständnis versehen und dadurch weitgehend selbst erklärend. Daher wird hier auf eine weitere Erläuterung verzichtet.

### BEZUGSZEICHENLISTE

- 10: Computernetzwerk
- 12: Sprachgateway
- 14: Konvertierungsgateway
- 16: Informationsserver
- 18: Client
- 20: Server
- 22: mobiles Endgerät
- 24: Telekommunikationsnetz
- 26: Mobilfunk-Gateway
- 28: Telefon
- 30: Application Root Dokument
- 32: Dokument D1
- 34: Dokument D2
- 36: Dokument D3

## Patentansprüche

1. Konvertierungseinrichtung (14) für einen akustischen Zugang zu einem Computernetzwerk (10), die für das Umwandeln von textuellen und/oder grafische Inhalte enthaltenden Dokumenten ohne Veränderung der Dokumente in ein Format ausgebildet ist, das für ein Sprachgateway (12) zum Verarbeiten geeignet ist.

2. Konvertierungseinrichtung nach Anspruch 1, **dadurch gekennzeichnet, dass** sie einen Client (18) und einen Server (20) umfasst, wobei der Server (20) zum Verarbeiten von Anforderungen von mindestens einem Sprachgateway (12) und der Client (18) zum Erzeugen von Befehlen zum Anfordern von textuelle und/oder grafische Inhalte enthaltenden Dokumenten von mindestens einem Informationsserver (16) des Computernetzwerks ausgebildet sind.

3. Konvertierungseinrichtung nach Anspruch 2, **dadurch gekennzeichnet, dass** sie derart ausgebildet ist, dass von dem mindestens einen Informationsserver (16) an den Client (18) gelieferte Inhalte in das Format für das Sprachgateway (12) umgewandelt werden.

4. Konvertierungseinrichtung nach einem der vorangehenden Ansprüche, **dadurch gekennzeichnet, dass** sie mindestens eine Filterfunktion aufweist, die derart einstellbar ist, dass aus allen Elementen eines Dokuments mit textuellem und/oder grafischem Inhalt nur die Elemente gefiltert werden, die in das Format für das Sprachgateway (12) umwandelbar sind.

5. Konvertierungseinrichtung nach einem der vorangehenden Ansprüche, **dadurch gekennzeichnet, dass** sie zum Kommunizieren mittels HTTP und/oder HTTPS mit dem Sprachgateway (12) und dem mindestens einen Informationsserver (16) ausgebildet ist.

6. Konvertierungseinrichtung nach einem der vorangehenden Ansprüche, **dadurch gekennzeichnet, dass** sie einen Parser aufweist, der zum Parsen von vorzugsweise textuellen Inhalten ausgebildet ist.

7. Konvertierungseinrichtung nach einem der vorangehenden Ansprüche, **dadurch gekennzeichnet, dass** die Inhalte in der Auszeichnungssprache WML erstellt sind.

8. Konvertierungseinrichtung nach Anspruch 7, **dadurch gekennzeichnet, dass** sie zum Umwandeln der textuellen und/oder grafischen Inhalte in die Auszeichnungssprache VoiceXML ausgebildet ist.

9. Konvertierungseinrichtung nach einem der Ansprüche 2-8, **dadurch gekennzeichnet, dass** der mindestens eine Informationsserver (10) ein WML-Server ist, dessen Inhalte insbesondere mittels eines WAP-fähigen mobilen Endgeräts (22) abrufbar sind.

10. Konvertierungseinrichtung nach einem der vorangehenden Ansprüche, **dadurch gekennzeichnet, dass** das Sprachgateway (12) mit einem Telekommunikationsnetz (24) verbunden ist.

11. Konvertierungsverfahren für einen akustischen Zugang zu einem Computernetzwerk (10), bei dem eine Konvertierungseinrichtung nach einem der vorangehenden Ansprüche eingesetzt wird, und wobei die Konvertierungseinrichtung (14) bei Eingehen einer Anforderung von einem Sprachgateway (12) zum Laden und Konvertieren eines Dokuments mit textuellem und/oder grafischem Inhalt das entsprechende Dokument von einem Informationsserver (16) anfordert und nach Lieferung des angeforderten Dokuments dessen Inhalt in ein zur Verarbeitung durch das Sprachgateway (12) geeignetes Format umwandelt.

12. Verfahren nach Anspruch 11, **dadurch gekennzeichnet, dass** die Konvertierungseinrichtung (12) zum Konvertieren den textuellen und/oder grafischen Inhalt des gelieferten Dokuments analysiert und ein zweites Dokument im Format zum Verarbeiten für das Sprachgateway (12) erzeugt und an das Sprachgateway (12) übermittelt.

13. Verfahren nach Anspruch 11 oder 12, **dadurch gekennzeichnet, dass** bei einer Anforderung vom Sprachgateway (12) zum Laden und Umwandeln eines Dokuments mit textuellem und/oder grafischem Inhalt ein Application Root Dokument gebunden wird, das zur globalen Definition von Funktionen und Variablen für das Format für das Sprachgateway (12) dient.

14. Verfahren nach Anspruch 13, **dadurch gekennzeichnet, dass** das Application Root Dokument mindestens eine Funktion zur Fehlerbehandlung und Variablen zur Ablaufsteuerung des Dialoges umfasst.

15. Verfahren nach Anspruch 13 oder 14, **dadurch gekennzeichnet, dass** das Application Root Dokument für alle Dokumente gleich oder anhand einer Startadresse eines umzuwandelnden Dokuments erzeugt wird.

16. Verfahren nach einem der Ansprüche 11-15, **dadurch gekennzeichnet, dass** alle weiteren erreichbaren Dokumente, für die in einem Dokument Verweise vorhanden sind, von der Konvertierungseinrichtung (14) geladen, umgewandelt und in dieser zwischen gespeichert werden.

17. Verfahren nach einem der Ansprüche 11-16, **dadurch gekennzeichnet, dass** bereits von der Konvertierungseinrichtung (14) umgewandelte Dokumente in einem Cache-Speicher abgelegt und bei nochmaliger Anforderung aus dem Cache-Speicher geladen werden.

18. Verfahren nach einem der Ansprüche 11-17, **dadurch gekennzeichnet, dass** die Konvertierungseinrichtung (14) derart konfiguriert wird, dass nur Dokumente von vorbestimmbaren Informationsservern (16) geladen und umgewandelt werden können.

19. Verfahren nach einem der Ansprüche 11-18, **dadurch gekennzeichnet, dass** alle weiteren erreichbaren Dokumente, für die in einem Dokument Verweise vorhanden sind, von der Konvertierungseinrichtung (14) geladen, und die darin enthaltenen Verweise in Verweislisten des aktuellen Dokumentes übernommen werden.
